# EUROPÄISCHE PATENTSCHRIFT

(11) **EP 2 207 982 B1**
(45) Veröffentlichungstag und Bekanntmachung des Hinweises auf die Patenterteilung: **02.03.2011**
(21) Anmeldenummer: 08843095.4
(22) Anmeldetag: 21.10.2008
(51) Int. Cl.: F16D 65/21, F16H 25/22

(54) **KOMBINIERTE FAHRZEUGBREMSE MIT ELEKTROMECHANISCH BETÄTIGBARER FESTSTELLBREMSE**
COMBINED VEHICLE BRAKE HAVING PARKING BRAKE WHICH CAN BE ELECTROMECHANICALLY ACTUATED
FREIN DE VÉHICULE COMBINÉ AVEC FREIN DE STATIONNEMENT À ACTIONNEMENT ÉLECTROMÉCANIQUE

(30) Priorität: 27.10.2007 DE 102007051455; 15.10.2008 DE 102008051350
(43) Veröffentlichungstag der Anmeldung: 21.07.2010
(73) Patentinhaber: Continental Teves AG & Co. oHG, 60488 Frankfurt (DE)
(72) Erfinder: WINKLER, Thomas, 55122 Mainz (DE); ZEIG, Willi, 64683 Einhausen (DE); HESS, Thomas, 64342 Seeheim-Jugendheim (DE); SCHUMANN, Marcus, 68535 Edingen/Neckarhausen (DE); KLIMT, Anja, 60488 Frankfurt/M. (DE)
(86) Internationale Anmeldenummer: PCT/EP2008/064209
(87) Internationale Veröffentlichungsnummer: WO 2009/053359

(56) Entgegenhaltungen:
- WO-A-2004/055415
- DE-A1- 10 315 219
- DE-B4- 10 150 803
- DE-U1- 7 640 810
- US-A- 2 767 593

## Beschreibung

Die vorliegende Erfindung betrifft eine kombinierte Fahrzeugbremse, die eine hydraulisch betätigbare Betriebsbremse und eine elektromechanisch betätigbare Feststellbremsvorrichtung aufweist, wobei in einem Bremsgehäuse ein hydraulischer Betriebsdruckraum von einem Bremskolben begrenzt ist, der zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels eines Getriebes wirkt, indem das Getriebe die Rotationsbewegung eines elektromechanischen Aktuators in eine Translationsbewegung umsetzt und eine Betätigung des Bremskolbens zur Durchführung von Feststellbremsvorgängen bewirkt und in der betätigten Stellung hält, wobei das Getriebe eine Gewindespindel und eine Gewindemutter aufweist, die über mehrere Wälzkörper miteinander in Kontakt stehen.

Eine derartige hydraulische Fahrzeugbremse mit elektrisch betätigbarer Feststellbremsvorrichtung ist beispielsweise aus der DE 101 50 803 B4 bekannt. Bei der vorbekannten Fahrzeugbremse ist ein Getriebe vorgesehen, das nach dem Wirkprinzip einer Gewindemutter-Spindel-Anordnung die Drehbewegung des Elektromotors in eine Längsbewegung des Bremskolbens zur Erzielung einer Feststellkraft umsetzt. Gemäß einem Ausführungsbeispiel ist diese Getriebeeinheit als sogenannte "Spindel-/Kugelumlaufbüchsenanordnung" ausgebildet, die auch Kugelgewindetrieb oder Kugelumlaufspindel genannt wird. Diese Kugelgewindetriebe weisen eine Gewindespindel und eine Gewindemutter auf, die über mehrere Wälzkörper miteinander in Kontakt stehen.

Aus dem deutschen Gebrauchsmuster DE 76 40 810 U ist eine Schraubenmutter mit Rollkörperanordnung ohne eine sogenannte Kugelrückführung bekannt. Nachteilig bei dieser Anordnung ist, dass bei einem Betätigen der Anordnung die Rollkörper gegeneinander gedrückt werden und Reibung erzeugt wird, die den Wirkungsgrad der Anordnung negativ beeinflusst. Es ist daher Aufgabe der vorliegenden Erfindung, eine kombinierte Feststellbremse der eingangs genannten Gattung dahingehend zu verbessern, dass der Wirkungsgrad erhöht wird.

Diese Aufgabe wird erfindungsgemäß durch eine Vorrichtung mit den Merkmalen des Anspruchs 1 gelöst. Dabei ist vorgesehen, dass die Wälzkörper zwischen zwei Anschlägen im Gewindegang begrenzt beweglich angeordnet sind, wobei ein Federelement zwischen den Wälzkörpern und einem Anschlag angeordnet ist und bei einem lastfreien Betätigen des Getriebes ein Rutschen der Wälzkörper ermöglicht, und bei einem Betätigen des Getriebes unter Last ein Abrollen der Wälzkörper bewirkt und wobei zwischen den Wälzkörpern mindestens ein weiteres Federelement als Zwischenfederelement vorgesehen ist, das die Reibkraft zwischen den Wälzkörpern untereinander beim Betätigen des Getriebes reduziert. Dabei halten die Zwischenfedern einen Weg vor, da die im lastfreien Fall durch die Federvorspannung außen sitzenden Kugeln beim Betätigen unter Last auf einem kleineren Durchmesser abrollen müssen.

Weitere vorteilhafte Ausgestaltungen und Weiterbildungen des Erfindungsgegenstandes sind den Unteransprüchen entnehmbar. Eine vorteilhafte Weiterbildung sieht vor, dass ein zweites Federelement vorgesehen ist, das zwischen den Wälzkörpern und dem anderen Anschlag angeordnet ist.

Das Verhältnis der Anzahl der Wälzkörper zur Anzahl der Zwischenfederelemente ist konstant, sodass bei größeren Anzahl an Wälzkörpern auch eine größere Anzahl an Zwischenfederelementen zur Anwendung kommt.

Bei einer besonders vorteilhaften Weiterbildung ist vorgesehen, dass die Zwischenfederelemente gleichmäßig zwischen den Wälzkörpern verteilt sind. Durch diese Maßnahme wird eine gleichmäßige Reduzierung der Reibkraft zwischen den Wälzkörpern untereinander realisiert.

Die Zwischenfederelemente sind als Schraubendruckfedern oder als Elastomerfedern ausgebildet.

Bei einer vorteilhaften Weiterbildung sind die Anschläge kraftschlüssig mit der Gewindemutter verbunden oder einteilig mit der Gewindemutter ausgebildet.

Eine weitere vorteilhafte Ausgestaltung sieht vor, dass der erste Anschlag eine Auflagefläche für das Federelement aufweist, während der andere Anschlag eine Anschlagfläche für das zweite Federelement, das als Vordruckfederelement wirkt, aufweist.

Die Erfindung wird nachfolgend anhand eines Ausführungsbeispiels im Zusammenhang mit der beiliegenden Zeichnung näher erläutert. In der Zeichnung zeigen:
- Fig. 1: eine Schnittdarstellung einer Fahrzeugbremse mit hydraulisch betätigbarer Betriebsbremse und elekt- romechanisch betätigbarer Feststellbremse und
- Fig. 2: ein in der Fahrzeugbremse nach Fig. 1 einsetzbare Getriebe zur Umsetzung einer Rotationsbewegung in eine Translationsbewegung.

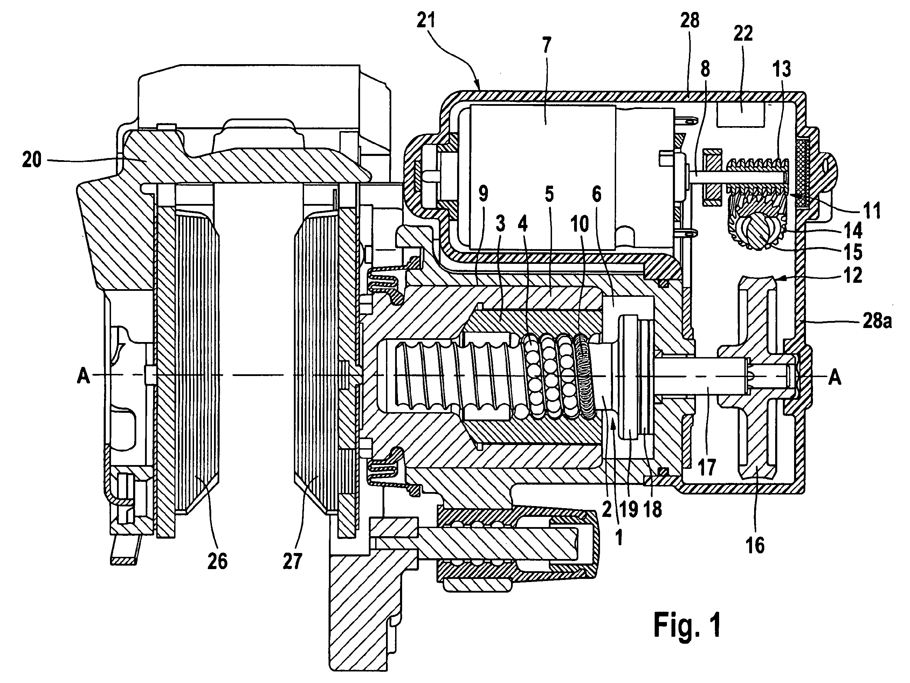

Die in Fig. 1 dargestellte hydraulische Fahrzeugbremse weist einerseits eine hydraulisch betätigbare Betriebsbremse und andererseits eine elektromechanisch betätigbare Feststellbremse auf. Die Fahrzeugbremse ist im gezeigten Beispiel als Schwimmsattel-Scheibenbremse ausgeführt, deren durch eine hydraulische Betätigung hervorgerufene Funktion dem auf diesem Gebiet tätigen Fachmann wohlbekannt ist und deswegen nicht näher erläutert zu werden braucht. Der Betätigung der Feststellbremse dient ein elektromechanischer Aktuator 7 bzw. Elektromotor 7, der zusammen mit einem zweistufigen Getriebe, der erforderlichen Sensorik sowie einer elektronischen Steuereinheit 22 in einem Antriebsmodul 21 integriert ist. Die oben erwähnte Fahrzeugbremse weist weiterhin ein Bremsgehäuse bzw. einen Bremssattel 2.0. auf, welcher den äußeren Rand einer nicht dargestellten Bremsscheibe und zwei auf beiden Seiten der Bremsscheibe angeordnete Bremsbeläge 26, 27 umgreift. Das Bremsgehäuse 20 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag 27 gegen die Bremsscheibe gedrückt, wobei als Reaktion das Bremsgehäuse 20 sich in der entgegen gesetzten Richtung verschiebt und dadurch auch den anderen Bremsbelag 26 gegen die Bremsscheibe drückt.

Wie bereits erwähnt wurde, ist eine Feststellbremsvorrichtung zur Durchführung von Feststellbremsvorgängen elektromechanisch betätigbar und wirkt ebenfalls auf den Bremskolben 5. Dazu ist ein Getriebe 1 vorgesehen, das die Rotationsbewegung des elektromechanischen Aktuators 7 bzw. Elektromotors 7 in eine Translationsbewegung umsetzt und eine Betätigung des Bremskolbens 5 entlang der Achse A bewirkt. Das Getriebe 1 wird im Wesentlichen durch eine Gewindespindel 2 und eine Gewindemutter 3 gebildet, die über Wälzkörper 4 miteinander in Verbindung stehen. Die Wälzkörper 4 sind als Kugeln ausgebildet. Ein mit der Gewindespindel 2 verbundener Schaft 17 ragt an der der Bremsscheibe abgewandten Seite aus dem Bremsgehäuse 20 heraus und wird unter Zwischenschaltung eines zweistufigen Untersetzungsgetriebes von dem vorhin erwähnten elektromechanischen Aktuator 7 angetrieben. Dabei sind Mittel zum Abdichten des Betriebsdruckraums 6 in der Bohrung des Bremsgehäuses 20, durch die der Schaft 17 ragt, vorgesehen. Die auf die Gewindespindel 2 übertragene Rotationsbewegung wird über die Kugeln 4, die sich im Gewindegang zwischen Gewindespindel 2 und Gewindemutter 3 befinden, auf die Gewindemutter 3 übertragen, die eine Translationsbewegung in Richtung der Achse A vollzieht. Dadurch wird auch der Bremskolben 5 betätigt, an dem sich die Gewindemutter 3 abstützt. Gleichzeitig wird die Gewindespindel 2 von einer Stufenbohrung 30 im Bremsgehäuse 20 aufgenommen und stützt sich über einen mit der Spindel 2 verbundenen Kragen 19 und ein Axiallager 18 am Bremsgehäuse 20 ab. Das Getriebe 1 setzt also die Drehbewegung des elektromechanischen Aktuators 7 in eine Linearbewegung um und ist für die Generierung der Zuspannkraft zur Durchführung eines Feststellbremsvorganges verantwortlich.

Beim Lösen der Feststellbremsvorrichtung wird der Elektromotor 7 entsprechend in der Gegenrichtung betrieben und die Gewindemutter 3 und damit auch der Bremskolben 5 vollziehen eine Bewegung in der Zeichnung nach rechts. Die Bremsbeläge 26, 27 sind nicht mehr mit der Bremsscheibe in Kontakt und der Feststellbremsvorgang ist beendet.

Der vorhin erwähnte Elektromotor 7 und das zweistufige Getriebe werden von einem zum Antriebsmodul 21 gehörenden Gehäuse 28 aufgenommen, das mit einem Gehäusedeckel 28a verschließbar ist. In der in Fig. 1 dargestellten Ausführungsform ist das zweistufige Getriebe als Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, einer Schnecke, und einem darin kämmenden schrägverzahnten Rad, dem Schneckenrad.

Die erste Getriebestufe, das heißt das erste Schneckengetriebe 11, ist eingangsseitig mit der Ausgangswelle 8 des Elektromotors 7 verbunden, während die zweite Getriebestufe, das heißt das zweite Schneckengetriebe 12, ausgangsseitig mit dem Schaft 17 bzw. mit dem Getriebe 1 bzw. 2, 3 verbunden ist. Wie es dargestellt ist, ist eine erste Schnecke 13 auf die Ausgangswelle 8 des Elektromotors 7 aufgesteckt und kämmt ein erstes Schneckenrad 14. Auf das Drehzentrum des ersten Schneckenrads 14 ist eine zweite Schnecke 15 aufgesteckt und wird von diesem in Rotation versetzt. Die zweite Schnecke 15 wiederum kämmt ein zweites Schneckenrad 16, das drehfest mit dem Schaft 17 verbunden ist und den Schaft 17 gemeinsam mit dem Getriebe 1 in Rotation versetzt und dabei eine translatorische Bewegung des Bremskolbens 5 erzeugt. Damit die auf diese Weise eingestellte Zuspannkraft während eines Feststellbremsvorganges erhalten bleibt, ist das zweite Schneckengetriebe 12 selbsthemmend ausgeführt.

Bei einer Betätigung des Getriebes 1 unter Last rollen die Wälzkörper 4 im Gewindegang ab. Dadurch wird ein verhältnismäßig hoher Wirkungsgrad von 85% bis 95% erreicht, bzw. bei Berücksichtigung der Reibungsverluste am Axiallager 18 75% bis 85%. Bei einem lastfreien Betätigen des Getriebes 1 rutschen die Wälzkörper 4 dagegen, d.h. bis der dem Bremskolben 5 zugeordnete Bremsbelag 34 an der nicht dargestellten Bremsscheibe anliegt, rutschen die Kugeln 4, weil es sich hierbei um eine nahezu lastfreie Betätigung handelt. Erst unter Last beginnen die Kugeln 4 zu wälzen bzw. abzurollen. Das Getriebe 1 wirkt also gleichzeitig als Nachstellung falls die Bremsbeläge 26, 27 verschlissen sind. Der Verzicht auf eine separate Nachstelleinrichtung bzw. die Integration von Nachstelleinrichtung und Betätigungseinrichtung in ein einziges Bauteil ist besonders kostengünstig und gleichzeitig robust. Damit das Abrollen der Wälzkörper 4 unter Last und das Rutschen bei lastfreier Betätigung des Getriebes 1 stets möglich ist, ist ein Federelement 10 vorgesehen, das einen Wälzweg zum Abrollen der Wälzkörper 4 vorhält. Dabei kann es jedoch vorkommen, dass die Wälzkörper 4 gegeneinander gedrückt werden und beim Abrollen aneinander reiben. Die Reibung zwischen den Wälzkörpern 4 untereinander verschlechtert den Wirkungsgrad des Getriebes 1, sodass weitere Zwischenfederelemente 25 zwischen den Wälzkörpern 4 angeordnet sind, die den Anpressdruck zwischen den Wälzkörpern 4 verringern und somit die Reibkraft zwischen den Wälzkörpern 4 reduziert. Je mehr Wälzkörper 4 im Getriebe 1 verwendet werden, umso mehr Zwischenfederelemente 25 werden eingesetzt, sodass das Verhältnis der Anzahl der Wälzkörper 4 zur Anzahl der Zwischenfederelemente 25 konstant ist.

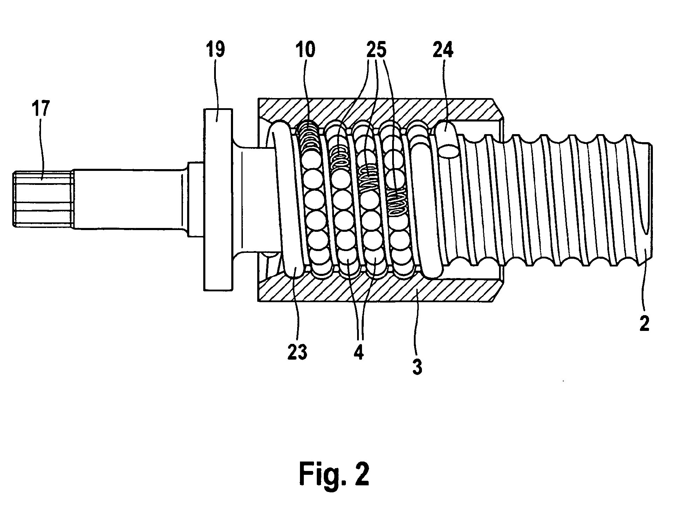

Die Anzahl und Lage der Zwischenfederelemente 25 kann variiert werden, um die Reibung zwischen den Wälzkörpern 4 effektiv zu reduzieren. Bei der in Fig. 2 dargestellten Ausführung sind die Zwischenfederelemente 25 gleichmäßig zwischen den Wälzkörpern 4 verteilt, d.h. nach einer vorab bestimmten Anzahl von Wälzkörpern 4 wird das nächste Zwischenfederelement 25 angeordnet. Durch diese Maßnahme wird eine gleichmäßige Reduzierung der Reibkraft zwischen den Wälzkörpern (4) untereinander realisiert.

Die Zwischenfederelemente sind, wie in Fig. 2 dargestellt, durch Schraubendruckfedern gebildet. Es sind aber auch beispielsweise Elastomerfedern denkbar.

Die Wälzkörper 4 sind zwischen zwei Anschlägen 23, 24 im Gewindegang begrenzt beweglich angeordnet, wobei das vorhin genannte Federelement 10 zum Vorhalten einer Wälzweges für die Wälzkörper 4 zwischen den Wälzkörpern und dem ersten Anschlag 23 angeordnet ist. Der erste Anschlag 23 weist daher eine Auflagefläche für das Federelement 10 auf. Ein zweites, nicht dargestelltes Federelement ist zwischen den Wälzkörpern 4 und dem anderen Anschlag 24 angeordnet und dient als sogenannte Vordruckfeder. Diese Vordruckfeder stützt sich am zweiten Anschlag 24 ab, der eine Anschlagfläche für das nicht dargestellte Vordruckfederelement aufweist. Beide Anschläge 23, 24 sind kraftschlüssig mit der Gewindemutter 3 verbunden oder einteilig mit der Gewindemutter 3 ausgebildet.

Durch das Aufnehmen von Zwischenfedern 25 zwischen den Wälzkörpern 4 wird also die Reibung zwischen den Wälzkörpern 4 untereinander reduziert und damit der Wirkungsgrad des Getriebes 1 verbessert und gleichzeitig der Verschleiß der Wälzkörper 4 minimiert.

### Bezugszeichenliste

- 1: Getriebe
- 2: Spindel bzw. Gewindespindel
- 3: Gewindemutter
- 4: Wälzkörper bzw. Kugeln
- 5: Bremskolben
- 6: hydraulischer Betriebsdruckraum
- 7: elektromechanischer Aktuator
- 8: Ausgangswelle
- 9: Bremszylinder
- 10: Federelement
- 11: erstes Schneckengetriebe
- 12: zweites Schneckengetriebe
- 13: erste Schnecke
- 14: erstes Schneckenrad
- 15: zweite Schnecke
- 16: zweites Schneckenrad
- 17: Schaft
- 18: Axiallager
- 19: Kragen
- 20: Bremssattel
- 21: Antriebsmodul
- 22: Steuereinheit
- 23: erster Anschlag
- 24: zweiter Anschlag
- 25: Zwischenfedern
- 26: Bremsbelag
- 27: Bremsbelag
- 28: Gehäuse
- 28a: Gehäusedeckel
- 29:
- 30: Stufenbohrung

## Patentansprüche

1. Kombinierte Fahrzeugbremse, die eine hydraulisch betätigbare Betriebsbremse und eine elektromechanisch betätigbare Feststellbremsvorrichtung aufweist, wobei in einem Bremsgehäuse (20) ein hydraulischer Betriebsdruckraum (6) von einem Bremskolben (5) begrenzt ist, der zur Durchführung von Betriebsbremsungen mit hydraulischem Druckmittel beaufschlagbar ist, so dass der Bremskolben (5) zur Erzielung einer Bremswirkung entlang einer Kolbenlängsachse (A) betätigbar ist, und wobei die Feststellbremsvorrichtung auf den Bremskolben (5) mittels eines Getriebes (1) wirkt, indem das Getriebe (1) die Rotationsbewegung eines elektromechanischen Aktuators (7) in eine Translationsbewegung umsetzt und eine Betätigung des Bremskolbens (5) zur Durchführung von Feststellbremsvorgängen bewirkt und in der betätigten Stellung hält, wobei das Getriebe (1) eine Gewindespindel (2) und eine Gewindemutter (3) aufweist, die über mehrere Wälzkörper (4) miteinander in Kontakt stehen, **dadurch gekennzeichnet, dass** die Wälzkörper (4) zwischen zwei Anschlägen (23, 24) im Gewindegang begrenzt beweglich angeordnet sind, wobei ein Federelement (10) zwischen den Wälzkörpern (4) und einem Anschlag (23) angeordnet ist und bei einem lastfreien Betätigen des Getriebes (1) ein Rutschen der Wälzkörper (4) ermöglicht und bei einem Betätigen des Getriebes (1) unter Last ein Abrollen der Wälzkörper (4) bewirkt und wobei zwischen den Wälzkörpern (4) mindestens ein weiteres Federelement als Zwischenfederelement (25) vorgesehen ist, das die Reibkraft zwischen den Wälzkörpern (4) untereinander beim Betätigen des Getriebes (1) reduziert.

2. Kombinierte Fahrzeugbremse nach Anspruch 1, **dadurch gekennzeichnet, dass** ein zweites Federelement vorgesehen ist, das zwischen den Wälzkörpern (4) und dem anderen Anschlag (24) angeordnet ist.

3. Kombinierte Fahrzeugbremse nach einem der Ansprüche 1 bis 2, **dadurch gekennzeichnet, dass** die Zwischenfederelemente (25) gleichmäßig zwischen den Wälzkörpern (4) verteilt sind, um eine gleichmäßige Reduzierung der Reibkraft zwischen den Wälzkörpern (4) untereinander zu realisieren.

4. Kombinierte Fahrzeugbremse nach einem der vorhergehenden Ansprüche, **dadurch gekennzeichnet, dass** die Zwischenfederelemente (25) als Schraubendruckfedern ausgebildet sind.

5. Kombinierte Fahrzeugbremse nach einem der Ansprüche 1 bis 3, **dadurch gekennzeichnet, dass** die Zwischenfederelemente (25) als Elastomerfedern ausgebildet sind.

6. Kombinierte Fahrzeugbremse nach einem der vorhergehenden Ansprüche, **dadurch gekennzeichnet, dass** die Anschläge (23, 24) kraftschlüssig mit der Gewindemutter (3) verbunden sind oder einteilig mit der Gewindemutter (3) ausgebildet sind.

7. Kombinierte Fahrzeugbremse nach Anspruch 6, **dadurch gekennzeichnet, dass** der erste Anschlag (23) eine Auflagefläche für das Federelement (10) aufweist, während der andere Anschlag (24) eine Anschlagfläche für das zweite Federelement aufweist.

## Claims

1. Combined vehicle brake which has a hydraulically actuable service brake and an electromechanically actuable parking brake device, a hydraulic service pressure space (6) being delimited in a brake housing (20) by a brake piston (5) which can be acted upon by hydraulic pressure medium in order to execute service braking operations, so that the brake piston (5) can be actuated along a piston longitudinal axis (A) in order to achieve a braking action, and the parking brake device acting on the brake piston (5) by means of a gear (1), in that the gear (1) converts the rotational movement of an electromechanical actuator (7) into a translational movement and causes an actuation of the brake piston (5) in order to execute parking braking operations and holds the said brake piston in the actuated position, the gear (1) having a threaded spindle (2) and a threaded nut (3) which are in contact with one another via a plurality of rolling bodies (4), **characterized in that** the rolling bodies (4) are arranged so as to be movable to a limited extent in the thread flight between two stops (23, 24), a spring element (10) being arranged between the rolling bodies (4) and one stop (23) and allowing a slipping of the rolling bodies (4) in the event of a load-free actuation of the gear (1) and causing a rolling of the rolling bodies (4) in the event of an actuation of the gear (1) under load, and at least one further spring element being provided between the rolling bodies (4) as an intermediate spring element (25) which reduces the frictional force of the rolling bodies (4) with respect to one another when the gear (1) is actuated.

2. Combined vehicle brake according to Claim 1, **characterized in that** a second spring element is provided, which is arranged between the rolling bodies (4) and the other stop (24).

3. Combined vehicle brake according to one of Claims 1 to 2, **characterized in that** the intermediate spring elements (25) are distributed uniformly between the rolling bodies (4), in order to implement a uniform reduction in the frictional force of the rolling bodies (4) with respect to one another.

4. Combined vehicle brake according to one of the preceding claims, **characterized in that** the intermediate spring elements (25) are designed as helical compression springs.

5. Combined vehicle brake according to one of Claims 1 to 3, **characterized in that** the intermediate spring elements (25) are designed as elastomeric springs.

6. Combined vehicle brake according to one of the preceding claims, **characterized in that** the stops (23, 24) are connected non-positively to the threaded nut (3) or are produced in one piece with the threaded nut (3).

7. Combined vehicle brake according to Claim 6, **characterized in that** the first stop (23) has a bearing face for the spring element (10), while the other stop (24) has a bearing face for the second spring element.

## Revendications

1. Frein de véhicule combiné, qui présente un frein de service à actionnement hydraulique et un frein de stationnement à actionnement électromécanique, dans lequel une chambre hydraulique de pression de service (6) est limitée dans un boîtier de frein (20) par un piston de frein (5), qui peut être soumis à un fluide comprimé hydraulique pour l'exécution de freinages de service, de telle manière que le piston de frein (5) puisse être actionné le long d'un axe longitudinal de piston (A) pour obtenir un effet de freinage, et dans lequel le dispositif de frein de stationnement agit sur le piston de frein (5) au moyen d'une transmission (1), en ce que la transmission (1) convertit le mouvement de rotation d'un actionneur électromécanique (7) en un mouvement de translation et provoque un actionnement du piston de frein (5) pour l'exécution d'opérations du frein de stationnement et le maintient dans la position actionnée, dans lequel la transmission (1) comprend une broche filetée (2) et un écrou fileté (3), qui sont en contact l'un avec l'autre au moyen de plusieurs corps de roulement (4), **caractérisé en ce que** les corps de roulement (4) sont disposés de façon mobile limitée entre deux butées (23, 24) dans le filet, dans lequel un élément de ressort (10) est disposé entre les corps de roulement (4) et une butée (23) et permet un glissement des corps de roulement (4) lors d'un actionnement sans charge de la transmission (1) et provoque un roulement des corps de roulement (4) lors d'un actionnement de la transmission (1) sous charge, et dans lequel il est prévu comme élément de ressort intermédiaire (25) entre les corps de roulement (4), au moins un autre élément de ressort qui réduit la force de frottement entre les corps de roulement (4) entre eux lors de l'actionnement de la transmission (1).

2. Frein de véhicule combiné selon la revendication 1, **caractérisé en ce qu'**il est prévu un deuxième élément de ressort, qui est disposé entre les corps de roulement (4) et l'autre butée (24).

3. Frein de véhicule combiné selon l'une quelconque des revendications 1 à 2, **caractérisé en ce que** les éléments de ressort intermédiaires (25) sont répartis uniformément entre les corps de roulement (4), afin de réaliser une réduction uniforme de la force de frottement entre les corps de roulement (4) entre eux.

4. Frein de véhicule combiné selon l'une quelconque des revendications précédentes, **caractérisé en ce que** les éléments de ressort intermédiaires (25) se présentent sous la forme de ressorts hélicoïdaux comprimés.

5. Frein de véhicule combiné selon l'une quelconque des revendications 1 à 3, **caractérisé en ce que** les éléments de ressort intermédiaires (25) se présentent sous la forme de ressorts en élastomère.

6. Frein de véhicule combiné selon l'une quelconque des revendications précédentes, **caractérisé en ce que** les butées (23, 24) sont assemblées par complémentarité de force à l'écrou fileté (3) ou sont réalisées d'une seule pièce avec l'écrou fileté (3).

7. Frein de véhicule combiné selon la revendication 6, **caractérisé en ce que** la première butée (23) présente une face d'appui pour l'élément de ressort (10), tandis que l'autre butée (24) présente une face de butée pour le deuxième élément de ressort.
